# FASCICULE DE BREVET EUROPEEN

(11) **EP 4 256 917 B1**
(45) Date de publication et mention de la délivrance du brevet: **25.12.2024**
(21) Numéro de dépôt: 23166672.8
(22) Date de dépôt: 05.04.2023
(51) Int. Cl.: A01B 63/11, E02F 9/22

(54) **MACHINE AGRICOLE AVEC UN SYSTEME DE SECURISATION**
LANDWIRTSCHAFTLICHE MASCHINE MIT SICHERUNGSSYTEM
AGRICULTURAL MACHINE WITH A SAFETY SYSTEM

(30) Priorité: 07.04.2022 FR 2203199
(43) Date de publication de la demande: 11.10.2023
(73) Titulaire: Kuhn SAS, 67700 Saverne (FR)
(72) Inventeur: CORNIL, Thomas, 67790 STEINBOURG (FR); STOCK, Paul-David, 57370 SAINT JEAN KOURTZERODE (FR)
(74) Mandataire: Hager, Esther Evelyne

(56) Documents cités:
- EP-A1- 2 316 256
- DE-U1- 202012 000 880
- FR-A1- 2 923 349

## Description

La présente invention concerne le domaine du machinisme agricole et notamment les machines agricoles de fenaison.

L'invention porte plus spécifiquement sur une machine agricole destinée à être attelée à un véhicule tracteur et comportant une unité de travail reliée à un châssis du véhicule tracteur par rapport auquel l'unité de travail est déplaçable, la machine pouvant occuper une configuration de travail dans laquelle l'unité de travail repose au moins partiellement au sol et une configuration de transport dans laquelle l'unité de travail est soulevée du sol. La machine comprend un dispositif d'allégement comportant au moins un vérin d'allégement relié avec le châssis par un tirant souple en compression d'un côté et avec l'unité de travail au niveau d'une articulation avant de l'autre côté, le vérin d'allégement pouvant reporter, en configuration de travail, au moins une partie du poids de l'unité de travail sur le châssis, le tirant souple en compression étant attaché avec le vérin d'allégement au niveau d'un point d'attache et avec le châssis au niveau d'un site de fixation.

Une machine telle qu'évoquée en introduction est connue du document EP2316256. Sur cette machine, la distance entre le site de fixation et l'articulation avant est supérieure en configuration de travail qu'en configuration de transport. Au cours du soulèvement de la machine pour passer en configuration de transport notamment, le vérin d'allégement arrivant en fin de course ne reporte, à partir d'un certain moment, plus, même partiellement, le poids de l'unité de travail sur le châssis, de sorte que le tirant souple en compression se détend, la gravité faisant alors pivoter le vérin d'allégement autour de l'articulation avant. Selon le modèle du véhicule tracteur, la forme et la hauteur des sites de fixations peut varier de sorte que si le vérin d'allégement ne s'est pas rétracté, ou pas complètement, lorsque le vérin d'allégement est pivoté autour de l'articulation avant, le point d'attache peut se rapprocher du véhicule tracteur. Dans certains cas, le vérin d'allégement, respectivement le point d'attache, peut alors percuter le véhicule tracteur, occasionnant des dégâts sur celui-ci et/ou sur la machine.

Le but principal de la présente invention est de remédier au moins partiellement au problème précité, et notamment d'éviter l'endommagement de la machine et du véhicule tracteur.

A cet effet, l'invention a pour objet une machine agricole destinée à être attelée à un véhicule tracteur et comportant au moins une unité de travail reliée à un châssis du véhicule tracteur par rapport auquel l'unité de travail est déplaçable, la machine pouvant occuper une configuration de travail dans laquelle l'unité de travail repose au moins partiellement au sol et une configuration de transport dans laquelle l'unité de travail est soulevée du sol. La machine comprend un dispositif d'allégement comportant au moins un vérin d'allégement relié avec le châssis par un tirant souple en compression d'un côté et avec l'unité de travail au niveau d'une articulation avant de l'autre côté, le vérin d'allégement pouvant reporter, en configuration de travail, au moins une partie du poids de l'unité de travail sur le châssis, le tirant souple en compression étant attaché avec le vérin d'allégement au niveau d'un point d'attache et avec le châssis au niveau d'un site de fixation, la machine étant caractérisée en ce qu'au moins un système de déviation permet de déplacer le vérin d'allégement en faisant pivoter le point d'attache autour de l'articulation avant de sorte à éloigner le point d'attache du plan médian de l'unité de travail.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en élévation latérale d'une machine agricole selon l'invention, attelée à l'avant d'un véhicule tracteur et en configuration de travail ;
[Fig. 2] est une vue en perspective de l'objet de la figure 1,
[Fig. 3] est une vue en élévation latérale d'une machine agricole selon l'invention, attelée à l'avant d'un véhicule tracteur et en configuration de transport,
[Fig. 4] représente une vue partielle d'une machine selon l'invention, attelée à l'avant d'un véhicule tracteur non représenté, vue depuis l'arrière, certains composants de la machine ayant été occultés,
[Fig. 5A] représente symboliquement un circuit hydraulique du dispositif d'allégement de la machine selon l'invention,
[Fig. 5B] représente symboliquement un autre circuit hydraulique possible de la machine selon l'invention, et,
[Fig. 5C] représente encore symboliquement un circuit hydraulique possible de la machine selon l'invention.

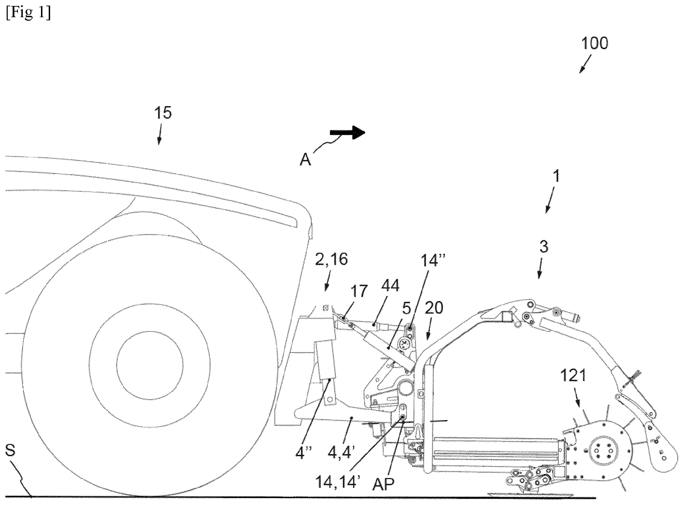

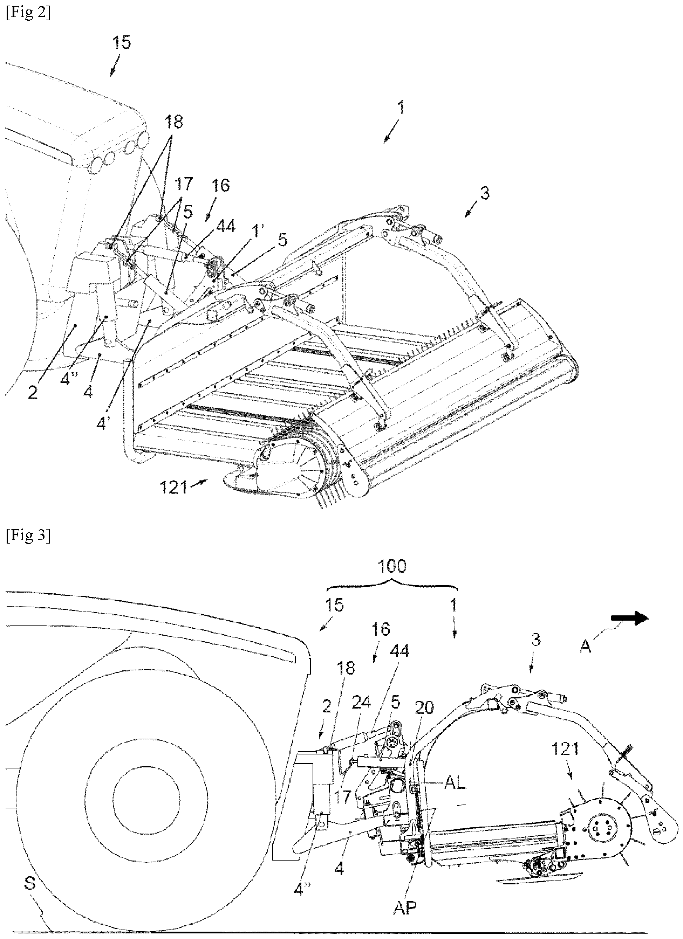

Les figures 1 et 2 montrent une machine (1) agricole destinée à être attelée à un véhicule tracteur (15). La machine (1) comporte une unité de travail (3) reliée à un châssis (2) du véhicule tracteur (15) par rapport auquel l'unité de travail (3) est déplaçable. La machine (1) peut occuper une configuration de travail dans laquelle l'unité de travail (3) repose au moins partiellement au sol (S). La machine (1) peut aussi occuper une configuration de transport dans laquelle l'unité de travail (3) est soulevée du sol (S). La machine (1) comprend un dispositif d'allégement (9) comportant au moins un vérin d'allégement (5) relié avec le châssis (2) par un tirant souple en compression (17) fixé avec le vérin d'allégement (5) d'un côté. Le vérin d'allégement (5) est relié avec l'unité de travail (3) au niveau d'une articulation avant (20) de l'autre côté. Le vérin d'allégement (5) peut reporter, en configuration de travail, au moins une partie du poids de l'unité de travail (3) sur le châssis (2). Le tirant souple en compression (17) est attaché avec le vérin d'allégement (5) au niveau d'un point d'attache (24). Le tirant souple en compression (17) est attaché avec le châssis (2) au niveau d'un site de fixation (18). Le site de fixation (18) est situé plus haut que l'articulation avant (20) en configuration de travail de la machine (1).

Dans le mode de réalisation de la figure 1, le point d'attache (24) se situe à l'extrémité arrière du vérin d'allégement (5), au moins en configuration de travail. Ainsi qu'il ressort des figures 1 et 3, la distance entre le site de fixation (18) et l'articulation avant (20) est supérieure en configuration de travail qu'en configuration de transport. En configuration de travail, du fait que le vérin d'allégement (5) exerce un effort de traction entre l'unité de travail (3) et le châssis (2), le tirant souple en compression (17) est tendu. En configuration de transport, la distance entre le site de fixation (18) et l'articulation avant (20) est telle que le tirant souple en compression (17) est détendu. En configuration de transport, le vérin d'allégement (5) ne transmet ainsi pas une partie du poids de l'unité de travail (3) sur le châssis (2). En effet, lors du passage de la configuration de travail à la configuration de transport, à partir du moment où le vérin d'allégement (5) ne reporte plus d'effort entre l'unité de travail (3) et le châssis (2), le vérin d'allégement (5) n'est plus soumis qu'à l'effort dû à son poids. Lors du passage de la configuration de travail à 1a configuration de transport, le vérin d'allégement (5) pivote alors vers le bas autour de l'articulation avant (20), et, du fait que la distance entre le site de fixation (18) et l'articulation avant (20) diminue, le point d'attache (24) pourrait heurter le châssis (2).

Conformément à l'invention, au moins un système de déviation (25) permet de déplacer le vérin d'allégement (5) en faisant pivoter le point d'attache (24) autour de l'articulation avant (20) de sorte à éloigner le point d'attache (24) du plan médian (PM) de l'unité de travail (3).

Grâce à ces dispositions, lorsque la machine (1) est soulevée, par exemple lors de son passage de la configuration de travail à la configuration de transport, le vérin d'allégement (5) est ainsi pivoté de manière à ce qu'il ne percute pas, même s'il est resté allongé, le châssis (2), respectivement le véhicule tracteur (15). Faire pivoter vers l'extérieur le point d'attache (24) autour de l'articulation avant (20) revient à éloigner le point d'attache (24) du plan médian (PM) de l'unité de travail (3). Notamment lors de son passage de la configuration de travail à la configuration de transport, le système de déviation (25) permet ainsi de déplacer le vérin d'allégement (5) en éloignant le point d'attache (24) d'un plan médian (PM) de l'unité de travail (3). Le système de déviation (25) évite ainsi avantageusement de détériorer le véhicule tracteur (15) et la machine (1). Le fait de faire pivoter le point d'attache (24) vers l'extérieur permet également d'éviter le contact entre le point d'attache (24) et le bras supérieur (44) du dispositif d'attelage (16). En outre, dans le cas où la machine (1) comporte deux vérins d'allégement (5), notamment montés symétriquement par rapport au plan médian (PM), le fait de pivoter les points d'attache (24) respectifs vers l'extérieur permet d'éviter que les vérins d'allégement (5) n'entrent en collision l'un avec l'autre.

De manière préférentielle, le dispositif d'allégement (9) comprend un régulateur de pression (6) relié à une chambre active (5') du vérin d'allégement (5) par une première conduite (7), le régulateur de pression (6) occupant, lorsque la pression dans la première conduite (7) est inférieure à une valeur de consigne, une première position (61) dans laquelle il autorise la circulation de fluide hydraulique entre la première conduite (7) et une deuxième conduite (8) reliant le régulateur de pression (6) avec une pompe (P) hydraulique dans la configuration de travail de la machine (1), le régulateur de pression (6) occupant, lorsque la pression dans la première conduite (7) est supérieure à la valeur de consigne, une deuxième position (62) dans laquelle il autorise une circulation de fluide hydraulique entre la première conduite (7) et une troisième conduite (11) reliant le régulateur de pression (6) avec un réservoir (T) dans la configuration de travail de la machine (1). Ainsi, la pression dans la chambre active (5') est maintenue constante, résultant en un allégement constant et impliquant une meilleure qualité de travail ainsi qu'une détérioration moindre du tapis végétal, ce sans accumulateur de pression hydropneumatique. En outre, l'injection de fluide n'étant réalisée que dans la première position (61) du régulateur de pression (6), le dispositif d'allégement (9) ne sollicite pas la pompe (P) en permanence, réduisant la puissance nécessaire au fonctionnement de la machine (1). En effet, en deuxième position (62) du régulateur de pression (6), la pompe (P) ne doit pas fournir de pression au dispositif d'allégement (9), le fluide risquant ainsi moins de chauffer, conservant ses propriétés plus longtemps, et réduisant le risque de baisse de performance de la machine (1) ainsi que la fréquence de vidange nécessaire.

Lors du fonctionnement de la machine (1), celle-ci est déplacée par le véhicule tracteur (15) selon une direction d'avance (A). Selon le mode de réalisation préféré des figures 1 à 3, la machine (1) comprend un bâti (1'). Le bâti (1') porte l'unité de travail (3). Le bâti (1') est configuré pour relier l'unité de travail (3) au châssis (2). Dans le mode de réalisation préféré, le châssis (2) fait partie intégrante du véhicule tracteur (15). Dans le mode de réalisation préféré, l'unité de travail (3) est articulée avec le bâti (1') au moins autour d'un axe pendulaire (AP) sensiblement parallèle à la direction d'avance (A). De manière simple, l'axe pendulaire (AP) est avantageusement situé dans le plan médian (PM) de l'unité de travail (3). Dans un mode de réalisation alternatif, l'unité de travail (3) n'est pas articulée, de sorte que le bâti (1') fait partie de l'unité de travail (3).

L'unité de travail (3) est reliée au châssis (2) par deux bras inférieurs (4, 4') et un bras supérieur (44). La machine (1), respectivement le bâti (1'), comprend deux sites d'accrochage inférieurs (14, 14') permettant l'accrochage des bras inférieurs (4, 4'). Le plan médian (PM) de l'unité de travail (3) est à équidistance des sites d'accrochage (14, 14') inférieurs. La machine (1) comprend également un site d'accrochage supérieur (14") permettant l'accrochage du bras supérieur (44) à la machine (1). Dans le mode de réalisation préféré, c'est le bâti (1') de la machine (1) qui comprend le site d'accrochage (14") permettant l'accrochage du bras supérieur (44) à la machine (1). Le plan médian (PM) passe par le site d'accrochage supérieur (14"). Le plan médian (PM) est vertical lorsque la machine (1) est sur un sol (S) horizontal. En outre, le plan médian (PM) est parallèle à la direction d'avance (A). Au moins un des bras inférieurs (4, 4') est relié au châssis (2) par un vérin de levage (4"). Le véhicule tracteur (15) comporte un dispositif d'attelage (16). Le dispositif d'attelage (16) comporte au moins deux bras inférieurs (4, 4'), un bras supérieur (44) et un vérin de levage (4"). Chaque bras (4, 4', 44) est articulé avec l'unité de travail (3) d'un côté, et avec le châssis (2) de l'autre, au moins autour d'axes sensiblement horizontaux, autorisant le déplacement vertical de l'unité de travail (3) par rapport au châssis (2). De préférence, le bras supérieur (44) et chaque bras inférieur (4, 4') est articulé avec l'unité de travail (3) par une rotule au niveau du site d'accrochage (14, 14', 14") respectif.

Le vérin d'allégement (5) est relié, directement ou indirectement, avec le châssis (2) d'un côté. Autrement dit, le châssis (2) est relié, directement ou non, soit avec la tige, soit avec le corps du vérin d'allégement (5). Le vérin d'allégement (5) est relié avec l'unité de travail (3) de l'autre côté. Autrement dit, l'unité de travail (3) est reliée à celui de la tige ou du corps du vérin d'allégement (5) qui n'est pas relié(e) avec le châssis (2). Selon un mode de réalisation alternatif non représenté, le vérin d'allégement (5) peut également être relié au châssis (2) d'un côté, et avec l'unité de travail (3) par le biais du dispositif d'attelage (16), respectivement par le biais d'un des bras (4, 4', 44).

De préférence, la deuxième conduite (8) est reliée au circuit hydraulique du véhicule tracteur (15) via un distributeur (19). Le distributeur (19) fait préférentiellement partie du véhicule tracteur (15). Le circuit hydraulique du véhicule tracteur (15) comprend la pompe (P) et le réservoir (T). En configuration de travail de la machine (1), le distributeur (19) est dans une première position (191). Dans sa première position (191), le distributeur (19) relie la deuxième conduite (8) à la pompe (P).

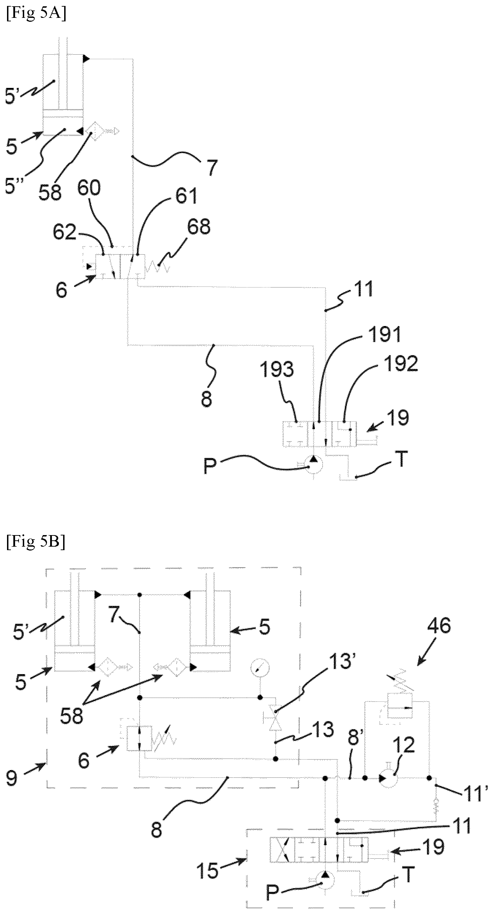

Dans le mode de réalisation de la figure 5B, la troisième conduite (11) est également reliée au circuit hydraulique du véhicule tracteur (15) via le ou un distributeur (19). Sur cette figure, dans sa première position (191), le distributeur (19) relie la troisième conduite (11) au réservoir (T). Dans le mode de réalisation de la figure 5B, une erreur de manipulation du distributeur (19) peut amener non seulement à ce que le vérin d'allégement (5) n'exerce plus d'effort dirigé vers le haut sur l'unité de travail (3), de sorte que l'unité de travail (3) présente plus de risques de détériorer le tapis végétal du sol (S), mais peut également amener à ce que le ou chaque vérin d'allégement (5) entre en contact avec le véhicule tracteur (15) entraînant des dégâts sur le véhicule tracteur (15) et/ou le vérin d'allégement (5).

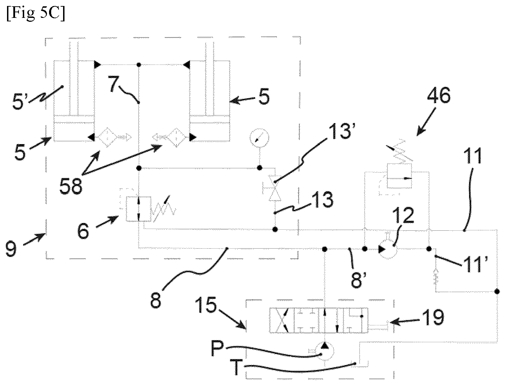

Dans le mode de réalisation préféré représenté sur la figure 5C, la troisième conduite (11) est directement reliée au ou à un réservoir (T). De cette façon, un utilisateur ne peut pas relier la troisième conduite (11) avec la pompe (P), même suite à une mauvaise manipulation du distributeur (19). Ainsi, dans le mode de réalisation préféré, il n'y a jamais de pression dans la troisième conduite (11).

Selon le mode de réalisation de la figure 5B, la deuxième conduite (8) et la troisième conduite (11) sont reliées au circuit hydraulique du véhicule tracteur (15) via un distributeur (19). En configuration de travail de la machine (1), le distributeur (19) est dans une première position (191). Dans la présente description, à moins d'une mention contraire, le distributeur (19) est à considérer en première position (191) et la machine (1) en configuration de travail. Le distributeur (19) est par exemple une vanne de distribution sélective à tiroir, préférentiellement actionnable depuis le tracteur (15).

Afin de pouvoir amener la pression dans le circuit hydraulique du dispositif d'allégement (9), respectivement dans le circuit hydraulique de la machine (1), au niveau de la pression atmosphérique, il est possible de placer le distributeur (19) dans une position flottante (192). Dans sa position flottante (192), le distributeur (19) permet de relier la deuxième conduite (8) au réservoir (T). Dans la position flottante (192), le distributeur (19) relie également le réservoir (T) et la troisième conduite (11), le cas échéant.

Dans la configuration de travail de la machine (1), le vérin de levage (4") est en mode flottant. En mode flottant, un vérin autorise la variation de sa longueur lorsqu'il est soumis à des efforts extérieurs. Le mode flottant du vérin de levage (4") permet le déplacement de l'unité de travail (3) par rapport au châssis (2) selon le relief du sol (S). Préférentiellement, placer le vérin de levage (4") en mode flottant revient à relier ses chambres au réservoir (T).

La chambre active (5') du vérin d'allégement (5) peut être reliée à la ou une pompe (P) hydraulique. La chambre active (5') du vérin d'allégement (5) peut aussi être reliée au ou à un réservoir (T). Lorsque la chambre active (5') du vérin d'allégement (5) est reliée à la pompe (P), le vérin d'allégement (5) exerce sur le bâti (1'), respectivement sur l'unité de travail (3), un effort dont au moins une composante est orientée vers le haut, au moins après un laps de temps. L'effort du vérin d'allégement (5) sur l'unité de travail (3) dépend de la pression dans la chambre active (5'). Une fois la valeur de consigne atteinte dans la chambre active (5'), le régulateur de pression (6) maintient la pression dans la chambre active (5') constante en configuration de travail, de sorte que l'effort du vérin d'allégement (5) sur l'unité de travail (3), dont au moins une composante est orientée vers le haut, est constant. Sur la figure 1, l'unité de travail (3) ne repose ainsi que partiellement au sol (S) du fait qu'une partie du poids de la machine (1) est reportée sur le châssis (2), respectivement sur l'essieu avant du véhicule tracteur (15).

Dans la configuration de transport, ainsi que représenté sur la figure 3, l'unité de travail (3) est soulevée du sol (S). La configuration de travail peut être obtenue, à partir de la configuration de transport, en reliant la chambre active (5') au réservoir (T) et en allongeant le vérin de levage (4") jusqu'à ce que l'unité de travail (3) atteigne le sol (S), après quoi le vérin de levage (4") doit être placé en mode flottant, puis la chambre active (5') reliée à la pompe (P). Avec un tel procédé de transposition entre configurations de transport et de travail, la machine (1) atteint cependant le sol (S) violemment, ce qui peut endommager la machine (1) et/ou le tapis végétal du sol (S). La configuration de travail est ainsi préférentiellement obtenue, à partir de la configuration de transport, en plaçant le vérin de levage (4") en mode flottant jusqu'à ce que l'unité de travail (3) atteigne le sol (S), et en reliant la chambre active (5') à une pompe (P). De manière à profiter d'une certaine course du vérin d'allégement (5) lorsque l'unité de travail (3) monte et descend par rapport au véhicule tracteur (15) depuis une position de référence, la chambre active (5') du vérin d'allégement (5) est reliée à la pompe (P) lorsque la machine (1) et le véhicule tracteur (15) reposent sur un sol (S) plan. Tant que la pression dans la chambre active (5') n'a pas atteint la valeur de consigne, le régulateur de pression (6) est dans sa première position (61). Après un laps de temps, la pression dans la chambre active (5') atteint la valeur de consigne de sorte que le régulateur de pression (6) passe en deuxième position (62).

En se référant à la figure 5A, lors du fonctionnement de la machine (1), lorsque la pression dans la chambre active (5') devient moindre que la valeur de consigne, par exemple lorsque le vérin d'allégement (5) se rétracte du fait que l'unité de travail (3) est sur une bosse, le régulateur de pression (6) passe en première position (61) et reste dans cette position, jusqu'à ce que la pression dans la chambre active (5') devienne supérieure à la valeur de consigne. Lorsque la pression dans la chambre active (5') dépasse la valeur de consigne, par exemple lorsque le vérin d'allégement (5) s'allonge du fait que l'unité de travail (3) se retrouve dans un trou, le régulateur de pression (6) passe en deuxième position (62) et reste dans cette position jusqu'à ce que la pression dans la chambre active (5') devienne inférieure à la valeur de consigne. Le régulateur de pression (6) a ainsi tendance à osciller entre ces deux positions, maintenant la pression dans la chambre active (5') du vérin d'allégement (5) sensiblement constante.

Ainsi qu'il ressort de la figure 5A, la pression dans la première conduite (7) est mesurée via une conduite de pilotage (60) faisant partie du régulateur de pression (6). La première conduite (7) reliant la chambre active (5') au régulateur de pression (6), la pression dans la première conduite (7) est égale à la pression dans la chambre active (5'). La valeur de consigne est propre au régulateur de pression (6). Afin de pouvoir régler l'effort du vérin d'allégement (5) sur l'unité de travail (3), la valeur de consigne est réglable, préférentiellement via un ressort (68) du régulateur de pression (6). La mise en oeuvre d'un ressort (68) dont la force est réglable permet de s'affranchir de toute électronique, et ainsi de réduire le coût de développement et de revient et d'aboutir à un entretien facilité. Le régulateur de pression (6) peut par exemple être du type connu sous la désignation DR10-01 commercialisé par la société Hydac, ou un régulateur analogue. Dans une variante de réalisation alternative non représentée, le régulateur de pression (6) pourrait aussi être piloté électroniquement ou hydrauliquement, notamment afin de pouvoir régler la valeur de consigne lors du fonctionnement de la machine (1), et notamment depuis la cabine du véhicule tracteur (15).

Ainsi qu'il ressort des figures 5B et 5C, la machine (1) peut comprendre un actionneur hydraulique (12) relié à la deuxième conduite (8) par une quatrième conduite (8'). L'actionneur hydraulique (12) peut également être relié à la troisième conduite (11) par une cinquième conduite (11'), de préférence à sa sortie. L'actionneur hydraulique (12) assure une fonction extérieure au dispositif d'allégement (9). Une telle disposition permet de remplir plusieurs fonctions à partir d'un seul et même distributeur (19), permettant de réduire le nombre de distributeurs nécessaires au fonctionnement de la machine (1). Une telle caractéristique est intéressante pour une machine (1) frontale, notamment lorsque le véhicule tracteur (15) ne dispose que d'un seul distributeur (19) à l'avant. L'actionneur hydraulique (12) comprend préférentiellement au moins un moteur ou vérin hydraulique. Dans les exemples représentés, l'unité de travail (3) comprend un rouleau de ramassage (121) configuré pour soulever un produit de fenaison tel que de l'herbe fauchée, et le projeter vers l'arrière suivant la direction d'avance (A). Dans ces exemples représentés, l'actionneur hydraulique (12) est le moteur hydraulique entraînant en rotation le rouleau de ramassage (121). La machine (1) pourrait aussi être destinée à faucher un produit végétal sur pieds, et éventuellement également à regrouper ce produit sur un côté de la machine (1) lors de son avance.

Ainsi que représenté sur les figures 5B et 5C, un limiteur de pression (46) peut être monté aux bornes de l'actionneur hydraulique (12) afin d'éviter l'endommagement de ce dernier. Préférentiellement, le limiteur de pression (46) est relié à la quatrième conduite (8') et à la cinquième conduite (11') de sorte à limiter la pression dans la quatrième conduite (8'). La valeur de tarage à partir de laquelle ce limiteur de pression (46) laisse circuler le fluide hydraulique entre la quatrième conduite (8') et la cinquième conduite (11') peut être réglée. Afin de ne pas limiter la pression dans le circuit hydraulique du dispositif d'allégement (9), respectivement dans tout le circuit hydraulique de la machine (1), la valeur de tarage du limiteur de pression (46) est supérieure à la valeur de consigne du régulateur de pression (6). Une telle réalisation permet de limiter la pression au niveau de l'actionneur hydraulique (12) sans toutefois limiter la pression dans le vérin d'allégement (5), ce tout en utilisant un même distributeur (19) pour l'actionneur hydraulique (12) et le vérin d'allégement (5). De plus, la position du limiteur de pression (46) aux bornes de l'actionneur hydraulique (12) permet que l'effort du vérin d'allégement (5) sur l'unité de travail (3) reste constant. En effet, si un tel limiteur de pression (46) était relié à la première conduite (7), la pression dans la chambre active (5') du vérin d'allégement (5) serait limitée par la valeur plus basse entre la valeur de consigne du régulateur de pression (6) et la valeur de tarage du limiteur de pression (46).

Ainsi que représenté sur les figures 5B et 5C, afin de ne pas perturber le fonctionnement du ou de chaque actionneur hydraulique (12) lorsque le régulateur de pression (6) est dans sa deuxième position (62), un clapet anti-retour peut être monté sur la cinquième conduite (11'), de manière à bloquer la circulation de fluide hydraulique en direction de l'actionneur hydraulique (12).

La machine (1) comprend une conduite de vidange (13) sur laquelle est montée une valve d'arrêt (13') fermée en configuration de travail. Cette conduite de vidange (13) relie la première conduite (7) à la troisième conduite (11). Dans la présente description, à moins d'une mention contraire, la valve d'arrêt (13') est considérée fermée. Une telle disposition permet, en ouvrant la valve d'arrêt (13'), de vidanger simplement et rapidement le vérin d'allégement (5) sans le distributeur (19). Afin que l'utilisateur puisse connaître la pression dans la chambre active (5') du vérin d'allégement (5), un manomètre est monté en série sur la première conduite (7) ou sur la conduite de vidange (13).

Dans le mode de réalisation préféré, la pompe (P), le réservoir (T) et le distributeur (19) font partie intégrante du véhicule tracteur (15). Afin d'éviter une sollicitation trop importante du circuit hydraulique du véhicule tracteur (15) pouvant amener à une perturbation d'une ou de certaines fonctions de la machine (1), il est cependant possible que la pompe (P), le réservoir (T) et le distributeur (19) soient intégrés à la machine (1), notamment si la machine (1) comporte plusieurs unités de travail (3). En outre, une machine (1) comportant la pompe (P) et le réservoir (T) permet de mieux maîtriser la propreté du fluide hydraulique.

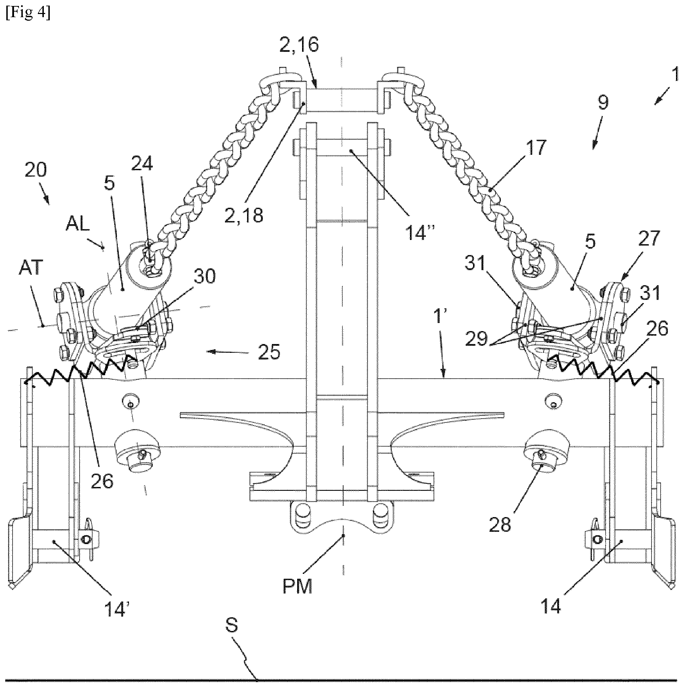

Dans le mode de réalisation préféré des figures 1 à 3, le vérin d'allégement (5) est relié avec le châssis (2) par un tirant souple en compression (17). Le tirant souple en compression (17) est attaché avec le châssis (2) au niveau d'un site de fixation (18). Le tirant souple en compression (17) est par exemple un câble (figure 3) ou une chaîne (figure 1). Il pourrait également s'agir d'un dispositif comportant une broche fixée avec l'un au choix entre le châssis (2) et le vérin d'allégement (5) et pouvant se déplacer librement dans le trou oblong d'une pièce fixée avec celui du châssis (2) et du vérin d'allégement (5) qui n'est pas fixé avec la broche. De manière simple et ainsi que représenté sur les figures 1 à 3, le tirant souple en compression (17) est une chaîne, chaque maillon pouvant avantageusement servir d'attache du vérin d'allégement (5) avec le châssis (2) au niveau du site de fixation (18). Ainsi quel que soit le véhicule tracteur (15) auquel la machine (1) est reliée, l'unité de travail (3) peut reposer au sol (S). Le vérin d'allégement (5) est solidarisé avec l'unité de travail (3) au niveau d'une articulation avant (20). Le cas échéant, le vérin d'allégement (5) est fixé à l'unité de travail (3) via le bâti (1') au niveau de cette articulation avant (20). Grâce aux différentes attaches du tirant souple en compression (17), il est possible de modifier la longueur entre le site de fixation (18) et l'articulation avant (20). La machine (1) peut donc être aisément attelée à différents types et/ou différentes hauteurs de véhicules tracteurs (15) sans devoir adapter la course du vérin d'allégement (5) à ceux-ci. Dans la configuration de travail au moins, le site de fixation (18) étant plus éloigné du sol (S) que l'articulation avant (20) du vérin d'allégement (5) avec le bâti (1'), l'effort du vérin d'allégement (5) sur l'unité de travail (3) est au moins partiellement orienté vers le haut. Ainsi que représenté sur la figure 4, le site de fixation (18) peut être intégré au point d'attache du bras supérieur (44) du dispositif d'attelage (16) avec le véhicule tracteur (15).

Ainsi qu'il ressort de la figure 5A, le vérin d'allégement (5) comprend une chambre active (5') reliée à la première conduite (7). Le vérin d'allégement (5) comprend également une chambre passive (5") séparée de la chambre active (5') par un piston. La chambre passive (5") est reliée à l'air. La chambre passive (5") est préférentiellement reliée à l'air par un reniflard (58). Le reniflard (58) est un bouchon laissant passer l'air, préférentiellement en filtrant celui-ci.

Le vérin d'allégement (5) peut être de type simple effet. En effet, la descente de l'unité de travail (3) d'une machine (1) telle que décrite ci-dessus peut être obtenue grâce au poids de l'unité de travail (3) et à la pesanteur. Une telle réalisation permet d'économiser au moins une conduite hydraulique, rendant la machine (1) plus simple à réaliser et à connecter au distributeur (19).

Du fait que le vérin d'allégement (5) est relié au châssis (2) par un tirant souple en compression (17), le vérin d'allégement (5) ne transmet un effort entre le châssis (2) et l'unité de travail (3) qu'en rétractation. La chambre active (5') est préférentiellement située du côté de la tige du vérin d'allégement (5). La chambre passive (5") est préférentiellement située du côté du corps du vérin d'allégement (5). Il serait possible de relier la tige du vérin d'allégement (5) à l'unité de travail (3) et le côté du corps du vérin d'allégement (5) au châssis (2). Cependant, la répartition des masses serait désavantageuse, le côté du corps étant plus lourd que le côté de la tige. En outre, relier la tige du vérin d'allégement (5) au bâti (1') ne permet pas de positionner l'articulation avant (20) ailleurs qu'à l'extrémité du vérin d'allégement (5), respectivement à l'extrémité libre de sa tige, sans limiter sa course. Ainsi qu'il ressort de la figure 1, la tige du vérin d'allégement (5) est préférentiellement reliée au châssis (2). Réciproquement, le côté du corps du vérin d'allégement (5) est, lui, relié à l'unité de travail (3) et articulé avec le bâti (1'), respectivement avec l'unité de travail (3), ailleurs qu'au niveau de l'extrémité du vérin d'allégement (5), ce sans limiter la course du vérin d'allégement (5) (voir figures 3 et 4). Le vérin d'allégement (5) fonctionne ainsi comme un simple effet dont la chambre reliée à l'air est du côté de son corps, à savoir la chambre passive (5"). Il découle de ce qui précède que lorsque la pompe (P) est reliée à la chambre active (5'), cela implique que le vérin d'allégement (5) exerce un effort sur l'unité de travail (3) dont au moins une composante est orientée vers le haut. Par ailleurs, le fait que la machine (1) comprenne un vérin d'allégement (5) ne pouvant être actionné qu'en rétractation permet qu'en configuration de transport, il soit impossible d'allonger le vérin d'allégement (5), qui pourrait sinon percuter le châssis (2), respectivement le véhicule tracteur (15), et occasionner des dégâts.

Selon une caractéristique intéressante, le système de déviation (25) est tel qu'il implique un effort résultant sur le vérin d'allégement (5) inférieur à l'effort reporté par le vérin d'allégement (5) sur le châssis (2) en configuration de travail. Autrement dit, le système de déviation (25) est tel que l'effort résultant sur le vérin d'allégement (5) est inférieur à l'effort dû au poids de l'unité de travail (3) qui est reporté sur le châssis (2) en configuration de travail. Grâce à cette disposition, même si le système de déviation (25) exerce également en configuration de travail un effort sur le vérin d'allégement (5), le vérin d'allégement (5) n'est pas pivoté par le système de déviation (25) en configuration de travail. En outre, plus l'effort à appliquer sur le vérin d'allégement (5) pour le déplacer est limité, plus le système de déviation (25) est économique et simple à réaliser. Enfin, un effort important appliqué sur le vérin d'allégement (5) de sorte à le faire pivoter vers l'extérieur en configuration de travail pourrait réduire l'efficacité du dispositif d'allégement (9), et donc induire une qualité de travail diminuée ou plus d'endommagement du tapis végétal.

Afin d'employer un vérin standard, l'articulation avant (20) peut être située au niveau de l'extrémité avant du vérin d'allégement (5) en configuration de travail. Cependant, pour une machine (1) frontale, plus l'unité de travail (3) est proche du véhicule tracteur (15), respectivement de l'essieu avant du véhicule tracteur (15), meilleur sera le suivi de terrain de l'unité de travail (3) et donc sa qualité de travail. En outre, plus l'unité de travail (3) d'une machine (1) frontale est proche du véhicule tracteur (15), meilleure sera la maniabilité de la machine (1) et son suivi de terrain. Afin d'assurer plus de proximité entre l'unité de travail (3) et le véhicule tracteur (15), dans le mode de réalisation préféré, l'articulation avant (20) est située plus en arrière, vu selon la direction d'avance (A), que l'extrémité avant du vérin d'allégement (5). Afin que la pesanteur fasse pivoter le vérin d'allégement (5) vers le bas et l'arrière lors du passage de la configuration de travail à la configuration de transport, l'articulation avant (20) est aussi située plus proche de l'extrémité avant du vérin d'allégement (5) que de son extrémité arrière, au moins lorsque la machine est en configuration de travail. Autrement dit, l'axe de tangage (AT) est positionné par rapport au vérin d'allégement (5) de sorte que son centre de gravité soit situé entre l'axe de tangage et le tracteur (15).

En vue d'employer un vérin standard, selon une variante de réalisation simple et économique, l'articulation avant (20) comprend ou est réalisée par une articulation rotule.

Ainsi que représenté sur la figure 4, afin d'assurer un pivotement suffisamment rapide du vérin d'allégement (5) autour de l'articulation avant (20), et/ou afin d'assurer le pivotement du vérin d'allégement (5) dans le cas où la machine (1) repose sur un sol (S) en dévers, le système de déviation (25) peut comporter un actionneur de rappel (26) relié d'un côté avec l'unité de travail (3) et d'un autre côté avec le vérin d'allégement (5). De préférence, l'actionneur de rappel (26) est fixé avec l'unité de travail (3) par le biais du bâti (1'). L'actionneur de rappel (26) est agencé pour exercer un effort éloignant le point d'attache (24) du plan médian (PM).

L'actionneur de rappel (26) pourrait notamment être un ressort de compression ou de traction, préférentiellement orienté sensiblement horizontalement et perpendiculairement à la direction d'avance (A). Un inconvénient d'un ressort de compression est que sa déformation doit être guidée, pour assurer la transmission de l'effort entre le bâti (1') et le vérin d'allégement (5). Dans le mode de réalisation préféré, l'actionneur de rappel (26) est un ressort de traction relié avec le bâti (1') en un point plus éloigné du plan médian (PM) que le point où l'actionneur de rappel (26) est relié avec le vérin d'allégement (5). L'actionneur de rappel (26) pourrait être réalisé par tout type de ressort ou en matériau élastomère. Un inconvénient d'un système de déviation (25) comportant un actionneur de rappel (26) réalisé par un ressort est qu'il complique l'accrochage du tirant souple en compression (17) avec le châssis (2), respectivement au niveau du site de fixation (18). De surcroit, si l'accrochage du tirant souple en compression (17) avec le châssis (2) n'est pas bien réalisé, le vérin d'allégement (5) peut revenir vers l'utilisateur cherchant à l'accrocher, pouvant occasionner des blessures. Ce risque est d'autant plus important que la raideur du ressort de l'actionneur de rappel (26) est importante.

Dans le mode de réalisation préféré, afin de faciliter la réalisation de l'articulation du ou de chaque vérin d'allégement (5) avec le bâti (1'), l'articulation avant (20) comprend une chape (27) montée pivotante avec l'unité de travail (3). La chape (27) comporte notamment deux flancs (29) entre lesquels s'étend le vérin d'allégement (5), respectivement le corps du vérin d'allégement (5). De cette manière, la course du vérin d'allégement (5) n'est avantageusement pas limitée par l'emplacement de l'articulation avant (20), ce tout en assurant plus de proximité entre l'unité de travail (3) et le véhicule tracteur (15). La chape (27) est montée pivotante sur le bâti (1'). La chape (27) est ainsi montée pivotante avec l'unité de travail (3), respectivement avec le bâti (1'), autour d'un axe de lacet (AL). L'axe de lacet (AL) est sensiblement perpendiculaire à la direction d'avance (A). De plus, l'axe de lacet (AL) est incliné par rapport à la verticale de sorte que le haut de l'axe de lacet (AL) est plus éloigné du plan médian (PM) que le bas de l'axe de lacet (AL). Autrement dit, l'axe de lacet (AL) est incliné vers l'extérieur. Dans ce document, « vers l'extérieur »correspond à s'éloigner du plan médian (PM) de l'unité de travail (3).

En outre, dans le mode de réalisation préféré, le vérin d'allégement (5) est monté pivotant avec la chape (27) autour d'un axe de tangage (AT). L'axe de tangage (AT) est sensiblement perpendiculaire à la direction d'avance (A). L'axe de tangage (AT) est sensiblement horizontal. En vue d'une construction simplifiée, l'axe de tangage (AT) est perpendiculaire à l'axe de lacet (AL). Par conséquent, l'axe de tangage (AT) peut être légèrement incliné par rapport à l'horizontale, préférentiellement de sorte qu'il est plus éloigné du sol (S) du côté du plan médian (PM) que du côté extérieur de la machine (1). L'articulation avant (20) est ainsi préférentiellement une articulation de type cardan.

Il ressort de ce qui précède que le système de déviation (25) comprend une articulation avant (20) de type cardan autorisant un pivotement du vérin d'allégement (5) selon un axe de lacet (AL) sensiblement perpendiculaire à la direction d'avance (A) et incliné vers l'extérieur de la machine (1), l'articulation avant (20) autorisant également un pivotement du vérin d'allégement (5) selon un axe de tangage (AT) sensiblement perpendiculaire à la direction d'avance (A) et à l'axe de lacet (AL). Grâce à un tel système de déviation (25), lorsque le poids du vérin d'allégement (5) le fait pivoter vers le bas autour de l'articulation avant (20), respectivement autour de l'axe de tangage (AT), le vérin d'allégement (5) est également obligé de pivoter autour de l'axe de lacet (AL).

Une articulation avant (20) de type cardan permet de disposer de plus d'angle de débattement, autour d'une position centrale, qu'une articulation rotule standard. L'amplitude des pivotements du vérin d'allégement (5) autour de l'axe de lacet (AL) et de l'axe de tangage (AT) peut ainsi être plus importante qu'avec une liaison rotule standard. Une articulation avant (20) de type cardan peut ainsi permettre d'éviter l'impact entre le vérin d'allégement (5) et le châssis (2) avec un véhicule tracteur (15) plus large à l'avant qu'une articulation avant (20) de type rotule. L'axe de tangage (AT) pourrait ne pas traverser le vérin d'allégement (5). Selon une variante de réalisation non représentée, l'axe de tangage (AT) est situé en dessous ou au-dessus du vérin d'allégement (5). De la même manière, l'axe de lacet (AL) pourrait s'étendre d'un côté ou de l'autre du vérin d'allégement (5).

Un système de déviation (25) comprenant un actionneur de rappel (26) réalisé par un ressort et une articulation avant (20) du type cardan permet de réduire la raideur du ressort de l'actionneur de rappel (26), diminuant ainsi le risque de blessures.

Dans le mode de réalisation de la figure 4, la chape (27) est solidaire avec une tige support (28) montée pivotante par rapport à l'unité de travail (3), respectivement par rapport au bâti (1'), suivant l'axe de lacet (AL). Une telle réalisation permet de guider le pivotement de la chape (27), respectivement du vérin d'allégement (5), par rapport au bâti (1') suivant l'axe de lacet (AL) de manière simple, sans perturber le pivotement du vérin d'allégement (5) autour de l'axe de tangage (AT) par rapport à la chape (27), et sans traverser le vérin d'allégement (5), réduisant son prix de revient.

De plus, chacun des flancs (29) de la chape (27) est traversé par un tourillon (31) respectif solidaire du vérin d'allégement (5) et montée pivotante par rapport à la chape (27) autour de l'axe de tangage (AT). Une telle réalisation permet de guider le pivotement du vérin d'allégement (5) suivant l'axe de tangage (AT) de manière simple, tout en autorisant le pivotement du vérin d'allégement (5) autour de l'axe de tangage (AT) par rapport à la chape (27) sans perturber le pivotement du vérin d'allégement (5) et de la chape (27) autour de l'axe de lacet (AL) par rapport au bâti (1').

Afin de réduire l'usure des tourillons (31) due au frottement avec les flancs (29), une bague est montée autour des tourillons (31), au niveau du flanc (29) respectif. La bague peut être avantageusement changée lorsqu'elle présente une usure trop importante. En complément, un couvercle contenant du lubrifiant peut être monté à l'extérieur des flancs (29). Particulièrement, un couvercle contenant du lubrifiant peut être monté sur les flancs (29) extérieurs. En effet, la chappe (27) étant inclinée vers l'extérieur, ces flancs (29) extérieurs risquent plus d'accumuler des poussières et impuretés que les flancs (29) intérieurs. Les couvercles peuvent notamment comporter des graisseurs afin de renouveler le lubrifiant et d'éloigner les impuretés.

Ainsi que représenté sur la figure 4, l'axe de lacet (AL) forme avec le plan médian (PM) et vu suivant la direction d'avance (A), un angle inférieur à 30°. L'angle, vu suivant la direction d'avance (A), formé par l'axe de lacet (AL) et le plan médian (PM) est préférentiellement inférieur à 20°. Il est plus préférentiellement encore aux alentours de 10°.

Dans le mode de réalisation préféré, la machine (1) comporte des butées latérales afin de limiter le pivotement du vérin d'allégement (5) autour de l'articulation avant (20), respectivement autour de l'axe de lacet (AL). Dans un mode de réalisation simple, les butées latérales sont réalisées par les flancs (29) de la chape (27). Additionnellement, une butée basse (30) peut limiter le pivotement du vérin d'allégement (5) autour de l'articulation avant (20). Plus précisément, la butée basse (30) limite le pivotement du vérin d'allégement (5) autour de l'axe de tangage (AT). La butée basse (30) est située sous le vérin d'allégement (5), de préférence proche de celui-ci. La butée basse (30) est située à l'arrière de l'articulation avant (20), et plus précisément entre le point d'attache (24) et l'articulation avant (20). Lorsque le vérin d'allégement (5) est au contact de la butée basse (30), seul son mouvement autour de l'axe de lacet (AL) est possible, favorisant ainsi ce pivotement lui permettant d'être déplacé en faisant pivoter le point d'attache (24) autour de l'articulation avant (20) de sorte à éloigner le point d'attache (24) du plan médian (PM).

Ainsi qu'il ressort de ce qui précède, le système de déviation (25) permet d'induire un effort résultant sur le vérin d'allégement (5) orienté sensiblement orthogonalement au plan médian (PM) et dans le sens opposé au plan médian (PM), au moins en configuration de transport de la machine (1). Le fait d'exercer sur le vérin d'allégement (5) un effort sensiblement orthogonal au plan médian (PM) permet d'employer un actionneur de rappel (26) exerçant un effort relativement faible, notamment un effort pouvant être moindre que l'effort dû au poids de l'actionneur de rappel (26). Un effort orienté sensiblement orthogonalement au plan médian (PM) permet ainsi également un faible risque de dégât et ou de blessure lors de l'accrochage du tirant souple en compression (17) avec le châssis (2) au niveau du site de fixation (18).

Dans le mode de réalisation préféré, la machine (1) comprend deux vérins d'allégement (5). Les deux vérins d'allégement (5) sont identiques et montés sensiblement symétriquement par rapport au plan médian (PM). Ainsi qu'il ressort des figures 5B et 5C, la chambre active (5') de chacun des vérins d'allégement (5) est reliée à la première conduite (7). Tout ce qui a été décrit pour le vérin d'allégement (5) ci-dessus est valable pour les deux vérins d'allégement (5), respectivement pour chacun des vérins d'allégement (5). Les vérins (5) sont arrangés de part et d'autre dudit axe pendulaire (AP) vu selon la direction d'avance (A), permettant de répartir équitablement l'allégement de part et d'autre de l'axe pendulaire (AP) quel que soit le relief du sol (S).

Bien entendu, l'invention n'est pas limitée aux modes de réalisation décrits et représentés aux dessins annexés. Des modifications restent possibles, notamment du point de vue de la constitution des divers éléments. Le cadre de l'invention est défini dans les revendications annexées.

## Revendications

1. Machine (1) agricole destinée à être attelée à un véhicule tracteur (15) et comportant une unité de travail (3) destinée à être reliée à un châssis (2) du véhicule tracteur (15) par rapport auquel l'unité de travail (3) est déplaçable, la machine (1) pouvant occuper une configuration de travail dans laquelle l'unité de travail (3) repose au moins partiellement au sol (S) et une configuration de transport dans laquelle l'unité de travail (3) est soulevée du sol (S), la machine (1) comprenant un dispositif d'allégement (9) comportant au moins un vérin d'allégement (5) destiné à être relié avec le châssis (2) par un tirant souple en compression (17) d'un côté et avec l'unité de travail (3) au niveau d'un articulation avant (20) de l'autre côté, le vérin d'allégement (5) pouvant reporter, en configuration de travail, au moins une partie du poids de l'unité de travail (3) sur le châssis (2), le tirant souple en compression (17) étant attaché avec le vérin d'allégement (5) au niveau d'un point d'attache (24), machine (1) **caractérisée en ce qu'**au moins un système de déviation (25) permet de déplacer le vérin d'allégement (5) en faisant pivoter le point d'attache (24) autour de l'articulation avant (20) de sorte à éloigner le point d'attache (24) du plan médian (PM) de l'unité de travail.

2. Machine agricole selon la revendication 1, **caractérisée en ce que** le système de déviation (25) est tel qu'il implique un effort résultant sur le vérin d'allégement (5) inférieur à l'effort reporté par le vérin d'allégement (5) sur le châssis (2) en configuration de travail.

3. Machine agricole selon l'une quelconque des revendications 1 ou 2, **caractérisée en ce que** l'articulation avant (20) est située plus en arrière, vu selon la direction d'avance (A), que l'extrémité avant du vérin d'allégement (5).

4. Machine agricole selon l'une quelconque des revendications 1 à 3, **caractérisée en ce que** l'articulation avant (20) est une liaison rotule.

5. Machine agricole selon l'une quelconque des revendications 1 à 4, **caractérisée en ce que** le système de déviation (25) comporte un actionneur de rappel (26) relié d'un côté avec l'unité de travail (3) et d'un autre côté avec le vérin d'allégement (5).

6. Machine agricole selon la revendication 5, **caractérisée en ce que** la machine (1) comprend un bâti (1') configuré pour relier l'unité de travail (3) au châssis (2), et **en ce que** l'actionneur de rappel (26) est un ressort de traction relié avec un bâti (1') en un point plus éloigné du plan médian (PM) que le point où l'actionneur de rappel (26) est relié avec le vérin d'allégement (5).

7. Machine agricole selon l'une quelconque des revendications 1 à 6, **caractérisée en ce que** le système de déviation (25) comprend une articulation avant (20) de type cardan autorisant un pivotement du vérin d'allégement (5) selon un axe de lacet (AL) sensiblement perpendiculaire à la direction d'avance (A) et incliné vers l'extérieur de la machine (1), l'articulation avant (20) autorisant également un pivotement du vérin d'allégement (5) selon un axe de tangage (AT) sensiblement perpendiculaire à la direction d'avance (A) et à l'axe de lacet (AL).

8. Machine agricole selon l'une quelconque des revendications 1 à 7, **caractérisée en ce que** l'articulation avant (20) comprend une chape (27) montée pivotante avec l'unité de travail (3), la chape (27) comportant deux flancs (29) entre lesquels s'étend le vérin d'allégement (5).

9. Machine agricole selon les revendications 6 et 7, **caractérisée en ce que** la chape (27) est solidaire avec une tige support (28) montée pivotante par rapport à l'unité de travail (3) suivant l'axe de lacet (AL).

10. Machine agricole selon l'une des revendications 7 à 9, **caractérisée en ce que** chacun des flancs (29) de la chape (27) est traversé par un tourillon (31) respectif solidaire du vérin d'allégement (5) et montée pivotante par rapport à la chape (27) autour de l'axe de tangage (AT).

11. Machine agricole selon l'une des revendications 7 à 10, **caractérisée en ce que** l'axe de lacet (AL) forme avec le plan médian (PM) et vu suivant la direction d'avance (A), un angle inférieur à 30°.

12. Machine agricole selon l'une quelconque des revendications 7 à 11, **caractérisée en ce qu'**une butée basse (30) limite le pivotement du vérin d'allégement (5) autour de l'axe de tangage (AT), la butée basse (30) étant située sous le vérin d'allégement (5).

13. Machine agricole selon l'une quelconque des revendications 1 à 12, **caractérisée en ce que** l'articulation avant (20) est située plus proche de l'extrémité avant du vérin d'allégement (5) que de son extrémité arrière, au moins lorsque la machine est en configuration de travail.

14. Combiné d'attelage (100) **caractérisé en ce qu'**il comporte un véhicule tracteur (15) et une machine (1) selon l'une des revendications 1 à 13.

## Patentansprüche

1. Landwirtschaftliche Maschine (1), die dazu bestimmt ist, an ein Zugfahrzeug (15) angekuppelt zu werden, und die eine Arbeitseinheit (3) umfasst, die dazu bestimmt ist, mit einem Rahmen (2) des Zugfahrzeugs (15) verbunden zu werden, in Bezug auf den die Arbeitseinheit (3) beweglich ist, wobei die Maschine (1) eine Arbeitskonfiguration, in der die Arbeitseinheit (3) zumindest teilweise auf dem Boden (S) aufliegt, und eine Transportkonfiguration, in der die Arbeitseinheit (3) vom Boden (S) angehoben ist, einnehmen kann, wobei die Maschine (1) eine Entlastungsvorrichtung (9) mit mindestens einem Entlastungszylinder (5) umfasst, der dazu bestimmt ist, auf einer Seite über eine komprimierbare Zugstange (17) mit dem Rahmen (2) und auf der anderen Seite an einem Vordergelenk (20) mit der Arbeitseinheit (3) verbunden zu werden, wobei der Entlastungszylinder (5) in der Arbeitskonfiguration zumindest einen Teil des Gewichts der Arbeitseinheit (3) auf den Rahmen (2) übertragen kann, wobei die komprimierbare Zugstange (17) an einem Kupplungspunkt (24) mit dem Entlastungszylinder (5) verbunden ist, Maschine (1) **dadurch gekennzeichnet, dass** mindestens ein Umlenksystem (25) die Bewegung des Entlastungszylinders (5) ermöglicht, indem der Kupplungspunkt (24) um das Vordergelenk (20) geschwenkt wird, sodass der Kupplungspunkt (24) von der Mittelebene (PM) der Arbeitseinheit wegbewegt wird.

2. Landwirtschaftliche Maschine nach Anspruch 1, **dadurch gekennzeichnet, dass** das Umlenksystem (25) so beschaffen ist, dass es eine resultierende Kraft auf den Entlastungszylinder (2) bewirkt, die geringer ist als die Kraft, die durch den Entlastungszylinder (5) auf den Rahmen (2) in der Arbeitskonfiguration übertragen wird.

3. Landwirtschaftliche Maschine nach irgendeinem der Ansprüche 1 oder 2, **dadurch gekennzeichnet, dass** sich das Vordergelenk (20), in Vorschubrichtung (A) gesehen, weiter hinten befindet als das vordere Ende des Entlastungszylinders (5).

4. Landwirtschaftliche Maschine nach irgendeinem der Ansprüche 1 bis 3, **dadurch gekennzeichnet, dass** das Vordergelenk (20) eine Kugelgelenkverbindung ist.

5. Landwirtschaftliche Maschine nach irgendeinem der Ansprüche 1 bis 4, **dadurch gekennzeichnet, dass** das Umlenksystem (25) ein Rückstellbetätigungsmittel (26) umfasst, das auf einer Seite mit der Arbeitseinheit (3) und auf der anderen Seite mit dem Entlastungszylinder (5) verbunden ist.

6. Landwirtschaftliche Maschine nach Anspruch 5, **dadurch gekennzeichnet, dass** die Maschine (1) ein Gestell (1') umfasst, das so ausgestaltet ist, dass es die Arbeitseinheit (3) mit dem Rahmen (2) verbindet, und dadurch, dass das Rückstellbetätigungsmittel (26) eine Zugfeder ist, die mit einem Gestell (1') an einem Punkt verbunden ist, der weiter von der Mittelebene (PM) entfernt ist als der Punkt, an dem das Rückstellbetätigungsmittel (26) mit dem Entlastungszylinder (5) verbunden ist.

7. Landwirtschaftliche Maschine nach irgendeinem der Ansprüche 1 bis 6, **dadurch gekennzeichnet, dass** das Umlenksystem (25) ein Vordergelenk (20) vom Typ Kardangelenk umfasst, das ein Schwenken des Entlastungszylinders (5) um eine Gierachse (AL) zulässt, die im Wesentlichen senkrecht zur Vorschubrichtung (A) verläuft und zur Außenseite der Maschine (1) hin geneigt ist, wobei das Vordergelenk (20) auch ein Schwenken des Entlastungszylinders (5) gemäß einer Pitchachse (AT) zulässt, die im Wesentlichen senkrecht zur Vorschubrichtung (A) und zur Gierachse (AL) verläuft.

8. Landwirtschaftliche Maschine nach irgendeinem der Ansprüche 1 bis 7, **dadurch gekennzeichnet, dass** das Vordergelenk (20) einen Gabelkopf (27) umfasst, der schwenkbar mit der Arbeitseinheit (3) montiert ist, wobei der Gabelkopf (27) zwei Seitenflächen (29) umfasst, zwischen denen sich der Entlastungszylinder (5) erstreckt.

9. Landwirtschaftliche Maschine nach den Ansprüchen 6 und 7, **dadurch gekennzeichnet, dass** der Gabelkopf (27) fest mit einer Stützstange (28) verbunden ist, die in Bezug auf die Arbeitseinheit (3) entlang der Gierachse (AL) schwenkbar montiert ist.

10. Landwirtschaftliche Maschine nach einem der Ansprüche 7 bis 9, **dadurch gekennzeichnet, dass** jede der Seitenflächen (29) des Gabelkopfes (27) von einem jeweiligen Zapfen (31) durchsetzt wird, der fest mit dem Entlastungszylinder (5) verbunden und in Bezug auf den Gabelkopf (27) um die Pitchachse (AT) schwenkbar montiert ist.

11. Landwirtschaftliche Maschine nach einem der Ansprüche 7 bis 10, **dadurch gekennzeichnet, dass** die Gierachse (AL) mit der Mittelebene (PM) und entlang der Vorschubrichtung (A) gesehen einen Winkel von weniger als 30° bildet.

12. Landwirtschaftliche Maschine nach irgendeinem der Ansprüche 7 bis 11, **dadurch gekennzeichnet, dass** ein unterer Anschlag (30) das Schwenken des Entlastungszylinders (5) um die Pitchachse (AT) begrenzt, wobei sich der untere Anschlag (30) unter dem Entlastungszylinder (5) befindet.

13. Landwirtschaftliche Maschine nach irgendeinem der Ansprüche 1 bis 12, **dadurch gekennzeichnet, dass** das Vordergelenk (20) näher am vorderen Ende des Entlastungszylinders (5) als an seinem hinteren Ende angeordnet ist, zumindest wenn sich die Maschine in der Arbeitskonfiguration befindet.

14. Landwirtschaftliche Kombination (100), **dadurch gekennzeichnet, dass** sie ein Zugfahrzeug (15) und eine Maschine (1) nach einem der Ansprüche 1 bis 13 umfasst.

## Claims

1. Agricultural machine (1) intended to be coupled to a tractor vehicle (15) and comprising a work unit (3) intended to be connected to a chassis (2) of the tractor vehicle (15) relative to which the work unit (3) can be moved, the machine (1) being able to take up a work configuration in which the work unit (3) rests at least partially on the ground (S) and a transport configuration in which the work unit (3) is raised from the ground (S), the machine (1) comprising a lightening device (9) having at least one lightening cylinder (5) intended to be connected to the chassis (2) by a flexible compression tie-rod (17) on one side and to the work unit (3) at a front articulation (20) on the other side, the lightening cylinder (5) being able to transfer, in the work configuration, at least some of the weight of the work unit (3) onto the chassis (2), the flexible compression tie-rod (17) being attached to the lightening cylinder (5) at an anchoring point (18), machine (1) **characterized in that** at least one deflection system (25) makes it possible to move the lightening cylinder (5) by pivoting the anchoring point (24) about the front articulation (20) so as to move the anchoring point (24) away from the midplane (PM) of the work unit.

2. Agricultural machine according to claim 1, **characterized in that** the deflection system (25) is such that it implies a resultant force on the lightening cylinder (5) which is less than the force transferred by the lightening cylinder (5) onto the chassis (2) in the work configuration.

3. Agricultural machine according to any one of claims 1 or 2, **characterized in that** the front articulation (20) is located further back, seen in the direction of advance (A), than the front end of the lightening cylinder (5).

4. Agricultural machine according to any one of claims 1 to 3, **characterized in that** the front articulation (20) is a ball joint connection.

5. Agricultural machine according to any one of claims 1 to 4, **characterized in that** the deflection system (25) comprises a retraction actuator (26), connected on one side to the work unit (3) and on another side to the lightening cylinder (5).

6. Agricultural machine according to claim 5, **characterized in that** the machine (1) comprises a frame (1') configured to connect the work unit (3) to the chassis (2), and **in that** the retraction actuator (26) is a tension spring connected to a frame (1') at a point further away from the midplane (PM) than the point where the retraction actuator (26) is connected to the lightening cylinder (5).

7. Agricultural machine according to any one of claims 1 to 6, **characterized in that** the deflection system (25) comprises a front articulation (20) of the cardan joint type allowing the lightening cylinder (5) to pivot about a yaw axis (AL) substantially perpendicular to the direction of advance (A) and tilted towards the outside of the machine (1), the front articulation (20) also allowing the lightening cylinder (5) to pivot about a pitch axis (AT) substantially perpendicular to the direction of advance (A) and to the yaw axis (AL).

8. Agricultural machine according to any one of claims 1 to 7, **characterized in that** the front articulation (20) comprises a clevis (27) pivotally mounted with the work unit (3), the clevis (27) comprising two sides (29) between which the lightening cylinder (5) extends.

9. Agricultural machine according to claims 6 and 7, **characterized in that** the clevis (27) is rigidly fastened to a support rod (28) pivotally mounted relative to the work unit (3) along the yaw axis (AL).

10. Agricultural machine according to one of claims 7 to 9, **characterized in that** each of the sides (29) of the clevis (27) is crossed by a respective pivot pin (31) rigidly fastened to the lightening cylinder (5) and pivotally mounted relative to the clevis (27) about the pitch axis (AT).

11. Agricultural machine according to one of claims 7 to 10, **characterized in that** the yaw axis (AL) forms an angle of less than 30° with the midplane (PM) and seen along the direction of advance (A).

12. Agricultural machine according to any one of claims 7 to 11, **characterized in that** a lower stop (30) limits the pivoting of the lightening cylinder (5) about the pitch axis (AT), the lower stop (30) being located under the lightening cylinder (5).

13. Agricultural machine according to any one of claims 1 to 12, **characterized in that** the front articulation (20) is located closer to the front end of the lightening cylinder (5) than to its rear end, at least when the machine is in the work configuration.

14. Agricultural convoy (100) **characterized in that** it comprises a tractor vehicle (15) and a machine (1) according to one of claims 1 to 13.
